# EUROPÄISCHE PATENTSCHRIFT

(11) **EP 0 578 107 B1**
(45) Veröffentlichungstag und Bekanntmachung des Hinweises auf die Patenterteilung: **20.08.1997**
(21) Anmeldenummer: 93110355.0
(22) Anmeldetag: 29.06.1993
(51) Int. Cl.: D04H 1/58, D04H 1/46, D04H 13/00

(54) **Vliesstoff aus natürlichen Fasern und Verwendungen dafür**
Non-woven with natural fibers and the use thereof
Non-tissé en fibres naturelles et l'application de celui ci

(30) Priorität: 09.07.1992 DE 4222426; 21.03.1993 DE 4308959
(43) Veröffentlichungstag der Anmeldung: 12.01.1994
(73) Patentinhaber: DIERIG HOLDING AG, D-86157 Augsburg (DE)
(72) Erfinder: Kampen, Walter, D-8900 Augsburg 1 (DE); Schmid, Andreas, D-8900 Augsburg 1 (DE)
(74) Vertreter: Goddar, Heinz J., Dr.

(56) Entgegenhaltungen:
- EP-A- 0 323 732
- WO-A-89/05366
- WO-A-91/08332
- DE-A- 4 240 174
- FR-A- 2 657 364
- DATABASE WPI Section Ch, Week 1692, Derwent Publications Ltd., London, GB; Class A94, AN 92-126175 & JP-A-4 057 951 (AGENCY OF IND SCI TECH) 28. Juni 1992

## Beschreibung

Die Erfindung betrifft einen Vliesstoff aus natürlichen Fasern sowie dessen Verwendungen.

Heutzutage begegnet man zunehmend dem Bedürfnis oder sogar der Forderung, ökologisch unbedenkliche Materialien auf den verschiedensten Gebieten einzusetzen, wobei die wirtschaftliche Recyclebarkeit ebenfalls im Vordergrund steht.

Beispielsweise zwingt die neue Verpackungsordnung Handel und Industrie, Transportverpackungen jeder Art zurückzunehmen. Das Verpackungsmaterial muß dabei anschließend zu hohen Kosten recycelt, verbrannt oder auf eine Deponie gebracht werden. Besonders kritisch ist das Entsorgen und auch das Recyceln von Verpackungsmaterialien, die ganz oder teilweise aus Kunststoff wie beispielsweise Polyvinylchlorid, Polyäthylen, Polystyrol bestehen. Selbst das Verbrennen von Polypropylen oder auch Polyäthylen zur Gewinnung von Fernwärme zieht beträchtliche Kosten nach sich, da die Verbrennungsanlagen mit Abgasfiltern auszurüsten sind, die Kosten in Höhe mehrerer 100 Millionen DM verursachen. Außerdem entstehen pro Tonne Mull etwa 100 kg Filterasche, die mit den verschiedensten Schadstoffen angereichert ist und in der Regel in Form zusammengepreßter Kuchen als Sondermüll entsorgt werden muß.

Die Probleme lassen sich nicht allein dadurch lösen, daß als Transportverpackung lediglich auf Umverpackungen aus Pappe oder dergleichen zurückgegriffen wird. Empfindliche Güter wie Glas und komplexe Geräte wie Computer oder Fernseher erfordern, daß die Verpackung ausreichende Sicherung gegen Stoß bietet. Außerdem sind manche zu verpackende Güter gegen Feuchtigkeit und auch gegen Temperatureinflüsse zu schützen.

Hehr und mehr werden auch Mehrwegverpackungen verwendet. Da jedoch auch diese einem Verschleiß unterliegen, bleibt die Entsorgungsproblematik letztendlich bestehen.

Ein anderer Trend geht zu baubiologischen Isolierungen von Gebäuden, insbesondere Wohnhäusern. Aus Energieeinsparungsgründen und zur Vermeidung von Lärmbelästigungen ist hier eine gute Wärme-, Kälte- und Schalldämmung unverzichtbar.

Üblicherweise verwendet werden unkaschierte oder mit Aluminiumfolie kaschierte Mineralwollefilze, Glasfaservllese, insbesondere in Form von Dämmplatten, aber auch Vliesbahnen aus Schafwolle, zerkleinertes Zeitungspapier, welches mit Hilfe von Borsalzen gegen Verrottung, Schädlingsbefall und Brand geschützt und als Flocke in Zwischenwände eingebracht wird, und Korkmatten als natürliche Materialien.

Die Mineralwollefasern und auch die Glasfasern sind sehr spröde. Bei der Verarbeitung neigen sie zum Brechen, und zwar in Faserfragmente, deren Durchmesser kleiner als 2 µm und deren Länge kleiner als 5 um ist. Diese kleinen Teilchen setzen sich In der Lunge fest und können weder ausgeschieden noch abgebaut werden. Das Auftreten dieser kleinen Tellchen hat beispielsweise zum Verbot von Asbest geführt.

Andererseits haben die oben angegebenen biologischen Dämmmaterialien den Nachteil, daß sie allenfalls in begrenzter Menge verfügbar und darüberhinaus zu teuer sind.

Ein Vliesstoff aus zellulosischen Fasern, nämlich Flachsfasern, welche zur Stabilisierung des Vlieses vernadelt sind ist aus der WO-A-9 108 332 bekannt. Diese vernadelten Matten werden als Polstermaterial für Sitzmöbel, Matratzen und dergleichen sowie als Fußbodenabdeckung eingesetzt.

Es ist die Aufgabe der Erfindung, ein Material zur Verfügung zu stellen, das nach ein- oder mehrmaligem Gebrauch ohne weiteres entsorgt oder auch kompostiert werden kann, wobei jedoch den bisher geltenden Anforderungen insbesondere hinsichtlich der Stabilität bei Verpackungsmaterial oder guten Dämmeigenschaften oder dergleichen weiter genügt werden soll.

Diese Aufgabe wird von einem Vliesstoff mit den Merkmalen gemäß Patentanspruch 1 gelöst. Vorteilhafte Ausgestaltungen sind Gegenstand der Unteransprüche. Verwendungen sind in den Ansprüchen 13 bis 20 angegeben.

Erfindungsgemäß ist vorgesehen, daß der Vliesstoff aus Baumwollfasern oder anderen cellulosischen Fasern besteht, welche zur Stabilisierung des Vlieses vernadelt sind. Ein derartiger Vliesstoff ist vollständig biologisch abbaubar und zeigt auch eine ausreichende Festigkeit, um für die Verpackung von Elektrogeräten, Maschinenteilen, Computern, Haushaltsgeräten, Möbeln, Flaschen usw. eingesetzt werden zu können, gegebenenfalls als Füll- oder Dämmstoff in üblicherweise verwendeten Umkartons.

Nach einer bevorzugten Ausführungsform ist bei dem Vliesstoff vorgesehen, daß er auf wenigstens einer Außenseite mit einer Schicht aus biologisch abbaubaren Mitteln wie Kartoffelstärke und/oder Alginaten und/oder dergleichen versehen ist, die durch Benetzen und anschließendes Trocknen aufgebracht ist. Durch die Benetzung ist die Oberfläche des Vlieses nach dem Trocknungsprozeß geschlossen. Somit können keine Fasern aus dem Vliesstoffverbund austreten. Weiterhin wird der Vliesstoff durch die Beschichtung sehr elastisch und zeigt federnde Eigenschaften und insbesondere eine gute dämpfende oder dämmende Wirkung. Selbst bei Einwirkung scharfer Gegenstände oder Ecken und Kanten von Gegenständen wird der Vliesstoffverbund kaum jemals durchstoßen.

Bevorzugt weist insbesondere dieser Vliesstoff ein Flächengewicht im Bereich von etwa 300 bis 3000 g/m² auf. Das Material kann in Rollen oder auch bereits den jeweiligen Verpackungserfordernissen angepaßt bereitgestellt werden.

Weiter vorteilhaft ist der Vliesstoff an wenigstens einer Außenseite mit einem stark verdichteten Vlies, einem Verstärkungsgewebe, -gewirk oder -gelege aus biologisch abbaubarer Faser versehen. Diese Ausführungsform eignet sich besonders für ein mehrfach verwendbares Verpackungsmaterial.

Das stark verdichtete Vlies bzw. das Verstärkungsgewebe, -gewirk oder -gelege können wenigstens teilweise von einer hydrophoben Beschichtung umgeben sein, um Wasser- bzw. Feuchtigkeitseintritt in die Verpackung zu verhindern.

Alternativ oder ergänzend kann ein Verstärkungsgewebe, -gewirk oder -gelege auch in das Vlies eingebettet sein, bei einem Vliesstoff in Mattenform beispielsweise in der in bezug auf die Mattenebene horizontal liegenden Mittelebene des Vlieses.

Es hat sich als vorteilhaft herausgestellt, das Verstärkungsgewebe, -gewirk oder -gelege durch Nadeln, Verkleben mit einem biologisch abbaubaren Kleber wie Kartoffelstärke, Nahen, Wirken und/oder Nähwirken zu verbinden.

Für bestimmte Anwendungszwecke kann es sinnvoll sein, wenn die Baumwollfasern oder die cellulosischen Fasern gebleicht sind. Das Bleichen kann dabei vor der Bildung des Vlieses am Fasermaterial oder auch am verfilzten Vlies vorgenommen werden.

Der besondere Vorteil des Vliesstoffes besteht darin, daß die Fasern eine sehr hohe Saugfähigkeit zeigen. Neben Anwendungsmöglichkeiten zur Verpackung von bruchgefährdeten Flüssigkeitsbehältern, wobei etwa austretende Flüssigkeit sofort vom Verpackungsmaterial aufgenommen wird, ist auch die Verwendung des Vliesstoffes als Putz- oder Wischtuch denkbar, insbesondere, nachdem er bereits als Verpackungsmaterial zum Einsatz gekommen ist.

Ein Vliesstoff für derartige Verwendungen wird vorzugsweise leichtgewichtig mit einem Flächengewicht im Bereich von etwa 50 bis 500 g/m² ausgebildet sein.

Vliesstoffe, soweit sie bisher beschrieben sind, können fast immer dort zum Einsatz kommen, wo bisher Kunststoffolien, Luftpolsterfolien, Wellpappe, Packpapiere oder ähnliche Verpackungsstoffe verwendet worden sind. Die Vliesstoffe können als Rollen oder auch zugeschnitten zur Verfügung gestellt werden. Unterschiedlichste Kombinationen sind möglich, was Verstärkungen und Beschichtungen bzw. Imprägnierungen betrifft.

Wenn der Vliesstoff in irgendeiner Ausgestaltung wie oben beschrieben mit einem biologisch abbaubaren Mittel wie Stärke oder Alginat getränkt und anschließend getrocknet ist, erhält man relativ harte Formteile, die auch konturscharf geschnitten werden können. Sie finden ihre bevorzugte Verwendung als Polstermaterial für empfindliche Güter und können Polystyrolschaum-Formteile ersetzen.

Dabei können gegebenenfalls zwei oder mehrere Vliesstoffmatten oder -platten aufeinandergestapelt und verklebt sein, je nach der für das Formteil notwendigen Dicke. Durch Stanzen kann dann aus dem Stapel die gewünschte Form ausgeschnitten werden, falls es erforderlich ist, schließt sich eine Nachbearbeitung an.

Eine bevorzugte Verwendung des Vliesstoffes, wiederum insbesondere dann, wenn er bereits ein- oder mehrmals als Verpackung eingesetzt worden ist, besteht darin, ihn in zerkleinerter oder zerschnittener Form als Ersatzstoff für Haterialien wie Chips, Würfel, Granulate oder dergleichen aus Kunststoff wie Polystyrolschaum oder andere, üblicherweise bei der Verpackung von Gütern verwendete Materialien einzusetzen, wobei er in dieser Form bevorzugt als Füllstoff dienen kann.

Der erfindungsgemäße Vliesstoff ist mehrwegfähig, recyclebar und problemlos zu entsorgen, da er ohne schädliche Rückstände biologisch abbaubar ist. Das Material läßt sich gegebenenfalls, nach Zerkleinern oder Zerschneiden, als Torfersatz verwenden.

Ebenfalls vorteilhaft ist die Verwendung des Vliesstoffes als wasserspeichernde Matte, insbesondere für den Einsatz im Gartenbau. Man kann auf diese Matten, nachdem sie Wasser aufgesaugt hat, Topfplanzen oder Pflanzenballen stellen und erspart sich so das ständige Gießen.

Der Vliesstoff kann auch in seiner Ausgestaltung als Matte zum Aufsaugen von öl verwendet werden.

Bewahrt hat sich der Vliesstoff gemäß der vorliegenden Erfindung auch bei der Warme- und/oder Schalldammung. Einsatzgebiete sind dabei Dach- und Wandisolierungen im Bausektor, Trittschall- und Bodenwärmedämmung sowie Rohr-, Armaturen- und Luftkanalisolierungen.

Insbesondere die Baumwolle hat alle angenehmen Eigenschaften des Naturstoffes Holz. Bei den Konstruktionssystemen mit Baumwolle müssen keine Dampfsperren eingebaut werden. Die Baumwolle schützt vor Bauschäden, weil sie in der Lage ist, wie das Holz Feuchtigkeit aufzunehmen und auch wieder abzugeben.

Dabei werden bezüglich der Wärmedämmung Werte erreicht, die mit denen anderer Isoliermaterialien gleichzusetzen sind, d.h. entsprechend der Wärmeleitfähigkeitsgruppe 0 35 bis 0 40. Gegebenenfalls kann vorgesehen sein, daß der Vliesstoff an wenigstens einer Außenseite mit einer Aluminiumfolie kaschiert ist.

Vorteilhaft ist auf die Fasern ein hydrophobes Mittel, ein Mittel gegen Verrottung, ein Mittel gegen Pilz- und/oder Schadlingsbefall oder/und ein die Entflammbarkeit verhinderndes Mittel aufgebracht, wobei durch diese letztere Maßnahme ein Brandverhalten B1 oder B2 nach DIN 4102 erreicht wird.

Nicht zuletzt ist das Material geruchsneutral.

Im folgenden soll die Erfindung beispielhaft anhand der beigefügten Zeichnung beschrieben werden. Dabei zeigt:
- Fig. 1: eine Schnittansicht eines Vliesstoffes (nicht beansprucht);
- Fig. 2: eine Schnittansicht einer ersten Ausführungsform eines Vliesstoffes gemäß der vorliegenden Erfindung;
- Fiq. 3: eine Schnittansicht einer zweiten Ausführungsform eines Vliesstoffes gemäß der vorliegenden Erfindung; und
- Fig.4: eine Schnittansicht einer dritten Ausführungsform eines Vliesstoffes gemäß der vorliegenden Erfindung.

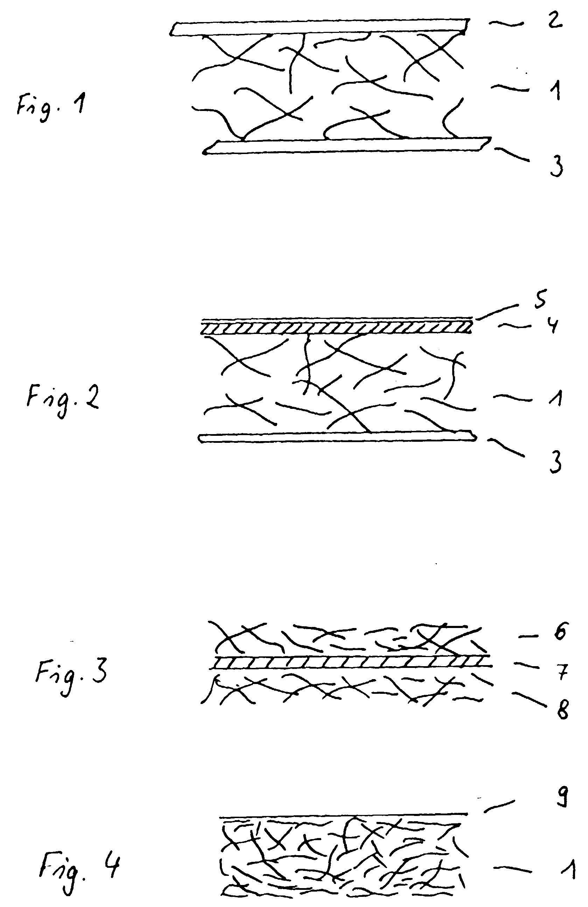

Der in Fig. 1 dargestellte Vliesstoff besteht aus einem mattenförmigen Vlies 1 aus Baumwollfasern oder cellulosischen Fasern, die zu einem wirren Filz vernadelt sind.

Bei dem in Fig. 1 Vlies ist, um Platten mit glatten Außenflächen zu schaffen, sowohl an der Oberseite als auch an der Unterseite des Vlieses 1 dieses jeweils mit einer Schicht 2, 3 aus Kartoffelstärke, Alginaten oder der- gleichen versehen, die das Vlies unter Bilden der gewünschten glatten Oberfläche verschließt. Insbesondere enden die oberflächennahen Fasern unterhalb oder innerhalb der jeweiligen Schicht 2, 3 und ragen jedenfalls nicht uber eine der Schichten 2, 3 hinaus.

Ein Vlies 1 wie in Fig. 1 ist für den Vliesstoff der Fig. 2 vorgesehen, wobei hier eine oberflächenversiegelnde Schicht 3 lediglich an der Unterseite des Vlieses 1 vorgesehen ist. Auf der Oberseite des Vlieses 1 ist ein stark verdichtetes Vlies, ein Verstärkungsgewebe, -gewirk oder -gelege 4 beispielsweise durch Kleben oder Vernadeln aufgebracht, das an seiner dem Vlies 1 abgewandten Seite mit einer hydrophoben Beschichtung 5 imprägniert ist. Die Beschichtung 5 kann, falls dies erforderlich erscheint, auch die Verstärkung 4 ganz oder teilweise durchsetzen oder an seiner dem Vlies 1 zugewandten seite vorgesehen sein. Gegebenenfalls wird man modifizierte Verbindungstechniken zum Anbringen der Verstärkung 4 auf dem Vlies 1 verwenden. Falls erforderlich,kann eine Verstärkung 4, mit oder ohne Beschichtung 5, anstelle der Schicht 3 angebracht werden.

Weiter zeigt Fig. 3 einen Vliesstoff, bei dem ein Verstärkungsgewebe, -gewirk oder -gelege 7 mittig zwischen zwei Vliesschichten 6, 8 eingebettet ist. Bei diesem Ausführungsbeispiel ist auf eine Oberflächenbehandlung verzichtet worden.

In Fig. 4 ist schließlich ein Vliesstoff dargestellt, der für Bauzwecke besonders geeignet ist. Auf die Fasern des Vlieses 1 sind ein hydrophobes Mittel, ein Mittel gegen Verrottung, ein Mittel gegen Pilz- und/oder Schädlingsbefall oder/und ein die Entflammbarkeit verhinderndes Mittel aufgebracht, wobei durch diese letztere Maßnahme das gewünschte Brandverhalten B1 oder B2 nach DIN 4102 erreicht werden soll. An einer Seite ist die Oberflache mit einer Aluminiumfolie 9 abgedeckt, die aufgeklebt, aufgenäht oder durch eine andere geeignete Maßnahme an dem Vlies 1 befestigt sein kann.

## Patentansprüche

1. Vliesstoff aus natürlichen Materialien, nämlich aus Baumwollfasern oder anderen cellulosischen Fasern, welche zur Stabilisierung des Vlieses (1) vernadelt sind, dadurch gekennzeichnet, daß er mit einer als Verstärkung dienenden Schicht aus einem stark verdichteten Vlies oder einem Verstärkungsgewebe, -gewirk oder -gelege (4) aus biologisch abbaubarer Faser versehen ist.

2. Vliesstoff nach Anspruch 1, dadurch gekennzeichnet, daß das stärker verdichtete Vlies oder das Verstärkungsgewebe, - gewirk oder -gelege (4) an wenigstens einer Außenseite vorgesehen ist.

3. Vliesstoff nach Anspruch 1, dadurch gekennzeichnet, daß das Verstärkungsgewebe, -gewirk oder -gelege (7) in das Vlies (6, 8) eingebettet ist.

4. Vliesstoff nach Anspruch 1, dadurch gekennzeichnet, daß er auf wenigstens einer Außenseite mit einer Schicht (2, 3) aus biologisch abbaubaren Mitteln wie Kartoffelstärke und/oder Alginaten und/oder dergleichen versehen ist, die durch Benetzen und anschließendes Trocknen aufgebracht ist.

5. Vliesstoff nach Anspruch 2, dadurch gekennzeichnet, daß das stärker verdichtete Vlies bzw. das Verstärkungsgewebe, -gewirk oder -gelege (4) wenigstens teilweise von einer hydrophoben Beschichtung (5) umgeben sind.

6. Vliesstoff nach einem der Ansprüche 1 bis 3 oder 5, dadurch gekennzeichnet, daß das Verstärkungsgewebe, -gewirk oder -gelege (4, 7) durch Nadeln, Verkleben mit einem biologisch abbaubaren Kleber wie Kartoffelstärke, Nähen, Wirken und/oder Nähwirken verbunden ist.

7. Vliesstoff nach einem der Ansprüche 1 bis 6, dadurch gekennzeichnet, daß die Baumwollfasern oder die zellulosischen Fasern gebleicht sind.

8. Vliesstoff nach einem der Ansprüche 1 bis 7, dadurch gekennzeichnet, daß er mit einem biologisch abbaubaren Mittel wie Stärke oder Alginat gestärkt oder anschließend getrocknet ist.

9. Vliesstoff nach einem der vorangehenden Ansprüche, dadurch gekennzeichnet, daß er ein Flächengewicht im Bereich von etwa 300 bis 3000 g/m² aufweist.

10. Vliesstoff nach einem der Ansprüche 1 bis 8, dadurch gekennzeichnet, daß er ein Flächengewicht im Bereich von 50 bis 500 g/m² aufweist.

11. Vliesstoff nach Anspruch 1, dadurch gekennzeichnet, daß er an wenistens einer Außenseite mit einer Aluminiumfolie (9) kaschiert ist.

12. Vliesstoff nach einem der vorangehenden Ansprüche, dadurch gekennzeichnet, daß auf die Fasern ein hydrophobes Mittel, ein Mittel gegen Verrottung, ein Mittel gegen Pilz- und/oder Schädlingsbefall oder/und ein die Entflammbarkeit verhinderndes Mittel aufgebracht ist.

13. Verwendung eines Vliesstoffes nach einem der Ansprüche 1 bis 12 als Verpackungsmaterial.

14. Verwendung eines Vliesstoffes nach einem der Ansprüche 1 bis 12 als Putz- oder Wischtuch.

15. Verwendung eines Vliesstoffes nach einem der Ansprüche 1 bis 12 als Formteil, wobei gegebenenfalls zwei oder mehrere Vliesstoffmatten oder -platten aufeinandergestapelt und verklebt sind, das Formteil durch Stanzen aus dem Stapel und, falls erforderlich, durch Nachbearbeiten hergestellt ist.

16. Verwendung eines Vliesstoffes nach einem der Ansprüche 1 bis 12 in zerkleinerter oder zerschnittener Form als Ersatzstoff für Materialien wie Chips, Würfel, Granulaten oder dergleichen aus Kunststoff, beispielsweise Polystyrolschaum, oder andere für Verpackungszwecke geeignete Materialien.

17. Verwendung eines Vliesstoffes nach einem der Ansprüche 1 bis 12 in zerkleinerter oder zerschnittener Form, als Ersatzstoff für Torf, Torfmull oder dergleichen.

18. Verwendung eines Vliesstoffes nach einem der Ansprüche 1 bis 12 als wasserspeichernde Matte, insbesondere für den Einsatz im Gartenbau.

19. Verwendung eines Vliesstoffes nach einem der Ansprüche 1 bis 12 als ölaufsaugende Matte.

20. Verwendung eines Vliesstoffes nach einem der Ansprüche 1 bis 12 als Wärme- und/oder Schalldämmaterial.

## Claims

1. A nonwoven made of natural materials, i.e. cotton fibres or other cellulose fibres needle-felted in order to stabilise the nonwoven (1), characterised in that it is provided with a reinforcing layer of a strongly compacted nonwoven or a reinforcing woven, knitted or laid fabric (4) of biologically degradable fibres.

2. A nonwoven according to claim 1, characterised in that the relatively strongly compacted nonwoven or the reinforcing woven, knitted or laid fabric (4) is provided on at least one outer side.

3. A nonwoven according to claim 1, characterised in that the reinforcing woven, knitted or laid fabric (7) is embedded in the nonwoven (6, 8).

4. A nonwoven according to claim 1, characterised in that on at least one outer side it has a layer (2, 3) of biologically degradable material such as potato starch and/or alginates and/or the like, applied by wetting and subsequent drying.

5. A nonwoven according to claim 2, characterised in that the relatively strongly compacted nonwoven or the reinforcing woven, knitted or laid fabric (4) is at least partly surrounded by a water-repellent coating (5).

6. A nonwoven according to any of claims 1 - 3 or 5, characterised in that the reinforcing woven, knitted or laid fabric (4, 7) is connected by needling, sticking with a biologically degradable adhesive such as potato starch, sewing, knitting and/or stitch-bonding.

7. A nonwoven according to any of claims 1 to 6, characterised in that the cotton fibres or the cellulose fibres are bleached.

8. A nonwoven according to any of claims 1 to 7, characterised in that it is reinforced with a biologically degradable substance such as starch or alginate or subsequently dried.

9. A nonwoven according to any of the preceding claims, characterised in that it has a weight per unit area in the range from about 300 to 3000 g/m².

10. A nonwoven according to any of claims 1 to 8, characterised in that it has a weight per unit area in the range from 50 to 500 g/m².

11. A nonwoven according to claim 1, characterised in that it is coated on at least one outer side with an aluminium foil (9).

12. A nonwoven according to any of the preceding claims, characterised in that a water-repellent agent, an anti-rot agent, a fungicide and/or pesticide and/or an anti-flammability agent are applied to the fibres.

13. Use of a nonwoven according to any of claims 1 to 12 as packaging material.

14. Use of a nonwoven according to any of claims 1 to 12 as a cleaning cloth or duster.

15. Use of a nonwoven according to any of claims 1 to 12 as a shaped element, wherein as required two or more nonwoven mats or sheets are stacked on one another and stuck, and the shaped element is produced by punching from the stack and by finishing if required.

16. Use of a nonwoven according to any of claims 1 to 12 in comminuted or cut-up form as a replacement for materials such as chips, cubes, granulates or the like of plastics, e.g. polystyrene foam, or other materials suitable for packaging purposes.

17. Use of a nonwoven according to any of claims 1 to 12 in comminuted or cut-up form as a replacement for peat, peat litter or the like.

18. Use of a nonwoven according to any of claims 1 to 12 as a water-storage mat, particularly for use in gardening.

19. Use of a non-woven adcording to any of claims 1 to 12 as an oil-absorbing mat.

20. Use of a nonwoven according to any of claims 1 to 12 as a heat and/or sound-insulating material.

## Revendications

1. Non-tissé en matières naturelles, notamment en fibres de coton ou autres fibres cellulosiques, qui, afin de stabiliser le non-tissé (1) sont aiguilletées, caractérisé en ce qu'il est doté d'une couche faisant office de renfort composée d'un non-tissé plus fortement serré ou d'un tissu, d'un tricot ou d'un doublage de renfort (4) composé de fibres biodégradables.

2. Non-tissé selon la revendication 1, caractérisé en ce que le non-tissé plus fortement serré ou que le tissu, tricot ou doublage de renfort (4) est présent sur au moins un côté extérieur.

3. Non-tissé selon la revendication 1, caractérisé en ce que le tissu, tricot ou doublage de renfort (7) est incorporé au non-tissé (6, 8).

4. Non-tissé selon la revendication 1, caractérisé en de qu'il est doté d'une couche (2, 3) composée d'agents biodégradables tels que de l'amidon de pomme de terre et/ou des alginates, et/ou équivalents, sur au moins un côté extérieur, qui sont déposés par humidification puis séchage ultérieur.

5. Non-tissé selon la revendication 2, caractérisé en ce que le non-tissé plus fortement serré et/ou le tissu, tricot du doublage de renfort (4) sont enveloppés au moins partiellement d'un revêtement hydrophobe (5).

6. Non-tissé selon l'une des revendications 1 à 3, ou 5, caractérisé et ce que le tissu, tricot ou doublage de renfort (4, 7) est lié par aiguilletage, par collage à l'aide d'une colle biodégradable telle que l'amidon de pomme de terre, par couture, par tricotage et/ou par tricotage Malimo.

7. Non-tissé selon l'une des revendications 1 à 6, caractérisé en ce que les fibres de coton ou les fibres cellulosiques sont blanchies.

8. Non-tissé selon l'une des revendications 1 à 7, caractérisé en ce qu'il est renforcé à l'aide d'un agent biodégradable tel que l'amidon ou l'alginate, ou ultérieurement séché.

9. Non-tissé selon l'une quelconque des revendications précédentes, caractérisé en ce qu'il présente un grammage compris dans la gamme allant d'environ 300 à 3 000 g/cm².

10. Non-tissé selon l'une des revendications 1 à 8, caractérisé en ce qu'il présente un grammage compris dans la gamme allant de 50 à 500 g/cm².

11. Non-tissé selon la revendication 1, caractérisé en ce qu'il est contre-plaqué sur au moins un côté extérieur avec une feuille d'aluminium (9).

12. Non-tissé selon l'une quelconque des revendications précédentes, caractérisé en ce qu'il est appliqué sur les fibres un agent hydrophobe, un agent antipourrissement, un agent fongicide et/ou un agent antiparasite et/ou un agent anti-inflammabilité.

13. Appiicacion d'un non-tissé selon l'une des revendications 1 à 12, en tant que matière d'emballage.

14. Application d'un non-tissé selon l'une des revendications 1 à 12, en tant que torchon ou chiffon à épousseter.

15. Application d'un non-tissé selon l'une des revendications 1 à 12, en tant que pièce de moule, dans laquelle deux ou, le cas échéant, plusieurs nattes ou plaques de non-tissé sont empilées les unes sur les autres et collées, la pièce de moule étant réalisée par estampage de la pile, et, au besoin par façonnage ultérieur.

16. Application d'un non-tissé selon l'une des revendications 1 à 12, sous forme de petits fragments ou de petites rognures destiné(e)s à constituer une matière de remplacement de matières telles que des pastilles, des dés, des granulés ou équivalents composés de matière synthétique, par exemple de la mousse de polystyrène, ou autres matières appropriées à des fins de conditionnement.

17. Application d'un non-tissé selon l'une des revendications 1 à 12, sous forme de petits fragments ou de petites rognures destiné(e)s à constituer une matière de remplacement de tourbe, de fibre de tourbe, ou équivalents.

18. Application d'un non-tissé selon l'une des revendications 1 à 12, en tant que natte retenant l'eau, en particulier destinée à être utilisée à des fins d'horticulture.

19. Application d'un non-tissé selon l'une des revendications 1 à 12, en tant que natte oléophile.

20. Application d'un non-tissé selon l'une des revendications 1 à 12, en tant que matériau d'isolation thermique et/ou sonique.
